# EUROPÄISCHE PATENTSCHRIFT

(11) **EP 2 619 336 B1**
(45) Veröffentlichungstag und Bekanntmachung des Hinweises auf die Patenterteilung: **19.11.2014**
(21) Anmeldenummer: 11817511.6
(22) Anmeldetag: 20.09.2011
(51) Int. Cl.: C21C 5/52, F27B 3/18, F27D 3/00

(54) **CHARGIERSCHACHT-SYSTEM UND VERFAHREN ZUM BEFÜLLEN**
CHARGING SHAFT SYSTEM AND METHOD FOR FILLING
SYSTÈME DE PUITS DE CHARGEMENT ET PROCÉDÉ DE REMPLISSAGE

(30) Priorität: 20.09.2010 DE 102010045825
(43) Veröffentlichungstag der Anmeldung: 31.07.2013
(73) Patentinhaber: Inteco special melting technologies GmbH, 8600 Bruck/Mur (AT)
(72) Erfinder: RUMMLER, Knut, 77694 Kehl (DE)
(74) Vertreter: Thämer, Wolfgang
(86) Internationale Anmeldenummer: PCT/DE2011/001741
(87) Internationale Veröffentlichungsnummer: WO 2012/062254

(56) Entgegenhaltungen:
- EP-A1- 0 646 758
- DE-A1- 3 120 717
- DE-A1- 19 926 059

## Beschreibung

Die Erfindung betrifft ein Chargierschacht-System eines Elektrolichtbogenofens mit einem öffenbaren Verschluss und mit einem eine Ausgabeöffnung und mindestens eine Absaugöffnung umfassenden schachtförmigen Behälter, wobei der Verschluss ein Vorchargierfach verschließt sowie ein Verfahren zum Befüllen.

Aus der DE 103 55 549 A1 ist ein derartiges System bekannt. Beim Entladen eines Schrottkorbs in den Schacht können Abgase aus dem Elektrolichtbogenofen unkontrolliert in die Umgebung austreten.

Aus der DE 31 20 717 A1 ist eine Schrottvorwärmvorrichtung bekannt. Schrott wird in einen vom Abgas durchströmbaren Speicherraum vorgewärmt und mittels eines Stößels in Richtung eines horizontal angeordneten Bodenverschlussschiebers gefördert. Da Schrott beim Vorwärmen verbackt, kann der Bodenverschlussschieber verklemmen. Außerdem besteht beim Öffnen des oberen horizontalen Verschlussschiebers die Gefahr des Ausqualmens der gesundheitsschädlichen Abgase in die Ofenhalle.

Die EP 0646 758 A1 zeigt eine kaskadenartig aufgebaute Schrottvorwärmvorrichtung mit einer darüber angeordneten Ladezone. Da die warmen Abgase aufsteigen, besteht auch hier die Gefahr des Ausqualmens durch die Klappen hindurch. Außerdem blockieren die geöffneten Klappen das Absaugen während des Beladens. Eine derartige Schrottvorwärmvorrichtung erfordert eine hohe Kranbahnhöhe sowie eine entsprechend hohe Ofenhalle.

Der vorliegenden Erfindung liegt die Problemstellung zugrunde, die Gefahr einer Umweltverschmutzung wesentlich zu verringern.

Diese Problemstellung wird mit den Merkmalen des Hauptanspruches gelöst. Das Vorchargierfach ist mittels einer öffenbaren Trennwand vom schachtförmigen Behälter getrennt. Im Vorchargierfach ist ein verfahrbares Schubschild angeordnet. Außerdem hat das Schubschild eine der Trennwand zugewandte Schubseite.

Um den schachtförmigen Behälter zu befüllen, wird bei Lage des Schubschilds in einer Ausgangsposition und bei geschlossener Trennwand der Verschluss geöffnet. Nach dem Laden des Einsatzmaterials in das Vorcharchierfach wird - bei weiterhin geschlossener Trennwand - der Verschluss verschlossen. Die Trennwand wird geöffnet und das Schubschild fördert mit seiner der Trennwand zugewandten Schubseite das Einsatzmaterial in den schachtförmigen Behälter.

Weitere Einzelheiten der Erfindung ergeben sich aus den Unteransprüchen und der nachfolgenden Beschreibung schematisch dargestellter Ausführungsformen.
- Figur 1:: Längsschnitt eines Elektrolichtbogenofens mit einem Chargierschacht-Systems;
- Figur 2:: Detail der Schubkorbführung;
- Figur 3:: Detail der Abdichtung;
- Figur 4:: Querschnitt des Vorchargierfachs;
- Figur 5:: Längsschnitt des beladenen Vorchargierfachs;
- Figur 6:: Chargierschacht-System mit teilbefülltem schachtförmigem Behälter;
- Figur 7:: Chargierschacht-System beim Laden des zweiten Schrottkorbvolumens;
- Figur 8:: Chargierschacht-System nach Befüllen des schachtförmigen Behälters mit dem zweiten Schrottkorbvolumen;
- Figur 9:: Zurückfahren des Schubkorbs;
- Figur 10:: Querschnitt durch Figur 8;
- Figur 11:: Schubkorb mit Hydromotorantrieb;
- Figur 12:: Gebogenes Schubschild;
- Figur 13:: Schubschild mit Seilzügen;
- Figur 14:: Schubschild mit Stangenführung;
- Figur 15:: Schwenkbare Trennwand;
- Figur 16:: Schubschild mit großem Hub.

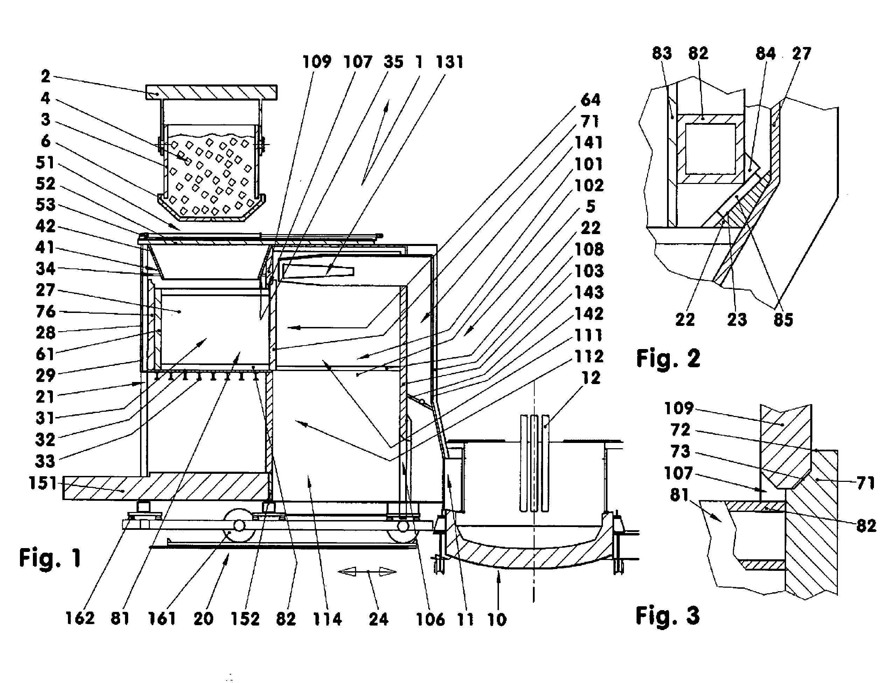

Die Figur 1 zeigt einen Elektrolichtbogenofen (5) mit einem Ofengefäß (10) und mit einem Chargierschacht-System (20). Mittels eines Elektrolichtbogenofens (5) wird Einsatzmaterial (4), z.B. Stahlschrott mit Hilfe elektrischer und/oder fossiler Energie geschmolzen. Nach dem Schmelzen und Feinen bzw. Homogenisieren wird aus dem Ofengefäß (10) Flüssigstahl mit einer Temperatur von z.B. 1620 Grad Celsius abgestochen. Mit einer derartigen Anlage können pro Stunde mehr als 100 Tonnen Flüssigstahl aus Stahlschrott erzeugt werden.

Da die Dichte des Einsatzmaterials (4) weniger als ein Zehntel der Dichte des Flüssigstahls, z.B. 7850 Kilogramm pro Kubikmeter, beträgt, kann das gesamte, für eine Schmelze erforderliche Einsatzmaterial nur portionsweise in das Ofengefäß (10) gefördert werden. Beispielsweise ist für eine Abstichmasse von 100 Tonnen Flüssigstahl der Einsatz von mehr als 200 Kubikmeter Schrott erforderlich.

Im Stahlwerk wird der Schrott zunächst auf einem Schrottplatz beispielsweise getrennt nach verschiedenen Schrottqualitäten, z.B. Leichtschrott, Automolbilschrott, Buntmetallschrott, Schrott mit Kunststoff, etc. gelagert. Jeweils ein Schrottkorb (3) wird beispielsweise nach einer vorgeschriebenen Beladefolge beladen. Das Beladevolumen des Schrottkorbs (3) beträgt im Ausführungsbeispiel z.B. 75 Kubikmeter.

Der so beladene Schrottkorb (3) wird mittels einer Fördervorrichtung (2), z.B. einem Hallenkran (2), an das Chargierschacht-System (20) gefördert.

Das Fördern des Schrotts (4) vom Schrottplatz zum Chargierschacht-System (20) kann auch mittels anderer diskontinuierlicher oder kontinuierlicher Fördermittel erfolgen.

Das Chargierschacht-System (20) umfasst ein Vorchargierfach (31) mit einem Verschluss (51) und einen schachtförmigen Behälter (101). Das Vorchargierfach (31) und der schachtförmige Behälter (101) sind mittels einer öffenbaren Trennwand (71) voneinander abgegrenzt.

Das Vorchargierfach (31) ist im Ausführungsbeispiel ein quaderförmiger Raum mit einem Volumen von z.B. 130 Kubikmetern und mit einem zumindest annähernd ebenen Boden (32). Der Boden (32) kann auch in Richtung der Trennwand (71) schräg abfallend, z.B. mit einem Schrägungswinkel von bis zu 15 Grad, ausgebildet sein. Der Boden (32) ist beispielsweise durch Bleche oder Knüppel einer Dicke von z.B. 100 Millimetern gebildet, die auf in Querrichtung (25) angeordneten Trägern (33), z.B. I-Trägern, Hohlprofilträgern mit quadratischem oder rechteckigem Querschnitt, etc. aufliegen. Diese Träger (33) sind mit einem wassergekühlten Traggerüst (21) des Chargierschacht-Systems (20) verbunden. Dieses Traggerüst (21) dient gleichzeitig als Wasserverteiler.

Die in Längsrichtung (24) des Chargierschacht-Systems (20) orientierten Seitenwände (26, 27) und die rückseitige Stirnwand (28) sind in das Traggerüst (21) eingebaut. Sie können für Wartungszwecke demontierbar ausgebildet sein. Die Rückwand (28) hat im Ausführungsbeispiel eine Entleerungsöffnung (29). Auch der Boden (32) kann eine Entleerungsöffnung aufweisen. Beispielsweise in Verlängerung des Bodens (32) sind in den Seitenwänden (26, 27) in Längsrichtung (24) orientierte Führungsschienen (22) angeordnet, vgl. Figur 2. Die Führungsflächen (23) dieser Führungsschienen (22) schließen mit einer horizontalen Ebene beispielsweise einen Winkel von 45 - 60 Grad ein. Gegebenenfalls kann auch ein Untergriff vorgesehen sein, z.B. als Abhebesicherung.

Die vorderseitige Stirnwand des Vorchargierfachs (31) wird in der Darstellung der Figur 1 durch die Trennwand (71) gebildet. Diese Trennwand (71), vgl. Figur 3, ist beispielsweise plattenförmig aus Stahlblech aufgebaut und hat z.B. an ihrer Oberseite (72) und an den Seitenflächen Zentrierschrägen (73) zum Abdichten des schachtförmigen Behälters (101) gegenüber dem Vorchargierfach (31). Die Trennwand (71) kann Versteifungsrippen aufweisen. Die Projektionsfläche der Trennwand (71) in die Ebene der Trennfläche ist größer als die in dieselbe Ebene projizierte Fläche des Schubschilds (61).

Die Oberseite (34) des Vorchargierfachs (31) hat eine z.B. rechteckige Öffnung (35). Die Fläche der Öffnung (35) kann der Fläche des Bodens (32) entsprechen oder kleiner sein als diese.

In der in der Figur 1 dargestellten Ausführungsform ist die Oberseite (34) des Vorchargierfachs (31) an einen Trichter (41) angedichtet. Dieser ragt in das Vorchargierfach (31), so dass zumindest die Prismenleisten (22) im Schatten des Trichters (41) liegen. Senkrecht herabfallendes Einsatzmaterial (4) kann damit die Führungsschienen (22) nicht beschädigen.

Der Trichter (41) hat im Ausführungsbeispiel ungekühlte Wandflächen. Der Winkel, den die Trichterflanken (42) mit der Fläche der Öffnung (35) einschließen, beträgt beispielsweise 60 Grad.

In der Darstellung der Figur 1 ist oberhalb des Trichters (41) der Verschluss (51) angeordnet. Der Verschluss (51) umfasst einen z.B. hydraulisch angetriebenen Verschlussschieber (52), der zwischen einer geöffneten und einer geschlossenen Endlage hin- und herbewegbar ist.

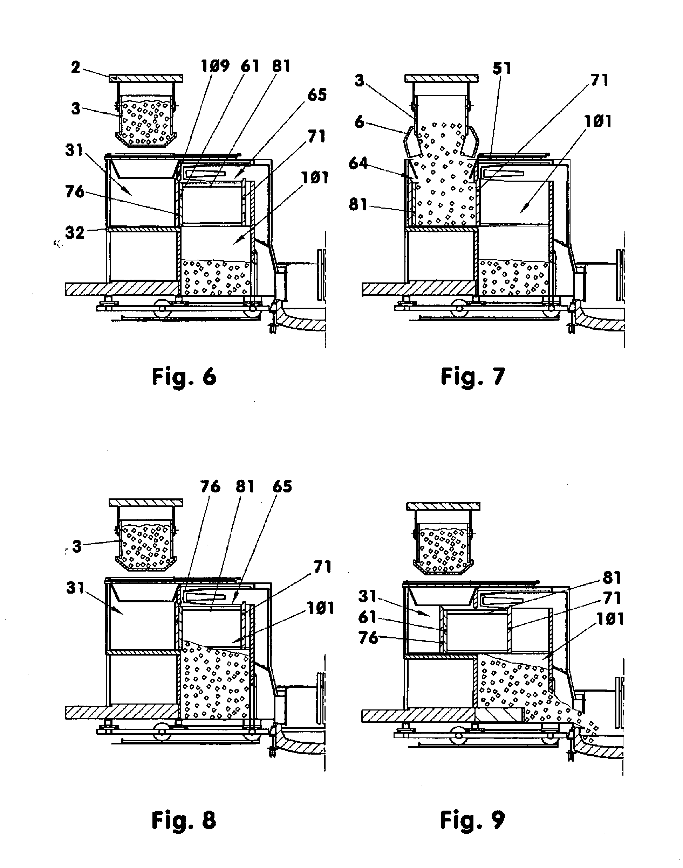

In der geschlossenen Endlage des Verschlussschiebers (52) ist die Öffnung (35) quasi hermetisch verschlossen. In der geöffneten Endlage des Verschlussschiebers (52), vgl. Figur 6, liegt die Oberseite des Trichters (41) vollständig frei. Der Antrieb des Verschlusschiebers (52), z.B. zwei parallel zueinander angeordnete Hydraulikzylinder (53), sind im Ausführungsbeispiel auf dem schachtförmigen Behälter (101) angeordnet.

Es ist auch denkbar, den Verschluss (51) zwischen der Öffnung (35) und dem Trichter (41) anzuordnen. Der Verschlussschieber (52) kann dann entsprechend kleiner gestaltet sein.

Im Vorchargierfach (31) ist weiterhin ein Schubschild (61) angeordnet. Dies ist eine in Querrichtung (24) des Chargierschacht-Systems (20) orientierte, z.B. verstärkte Platte mit einer Dicke von z.B. 100 Millimetern. In der Darstellung der Figur 1 ist das Schubschild (61) vertikal angeordnet. Es kann vertikale und/oder horizontale Verstärkungsrippen aufweisen.

Das Schubschild (61) kann auch entlang einer horizontalen und/oder vertikalen Biegelinie gebogen sein. Die Biegelinie liegt in beiden Fällen auf der der Trennwand (71) zugewandten Schubseite (62) des Schubschilds (61).

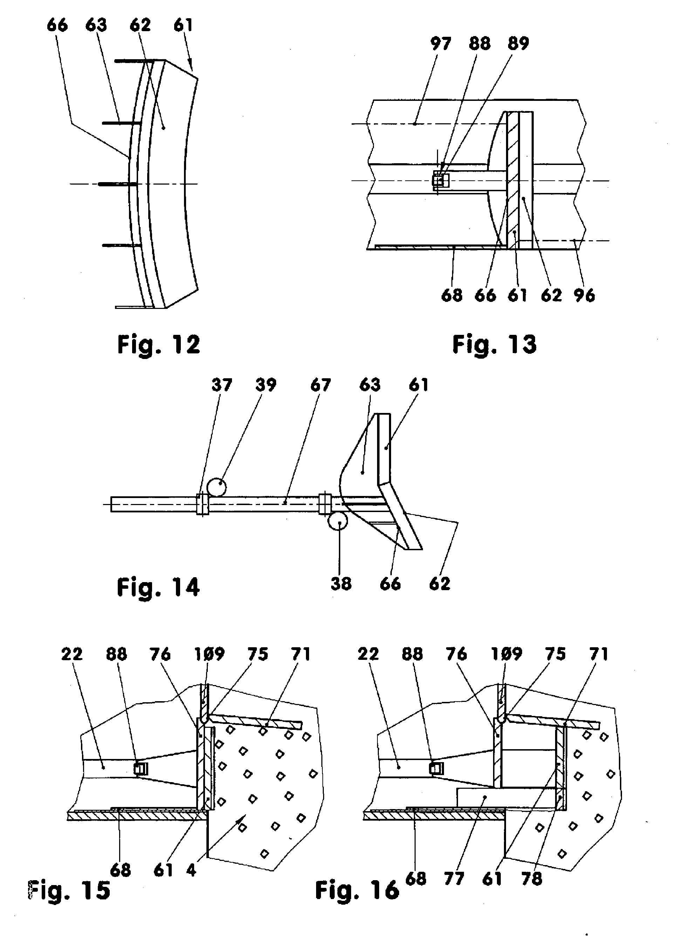

Die Figur 12 zeigt ein schaufelförmig ausgebildetes Schubschild (61). Es hat einen konstanten Krümmungsradius mit vertikaler Biegelinie, der der doppelten Breite des Schubschilds (61) entspricht. Weiterhin ist das Schubschild (61) um eine horizontale Achse gebogen. Auf der Rückseite (66) sind z.B. fünf vertikal orientierte Verstärkungsrippen (63) angeordnet. Gegebenenfalls können auf der Schubseite (62) zusätzliche vertikal orientierte Bleche angeordnet sein, z.B. an den äußeren Rändern des Schubschilds (61). Es ist auch denkbar, das Schubschild (61) im unteren Bereich trapezförmig, V-förmig, halbrund, etc. auszubilden.

In der in der Figur 1 dargestellten Ausgangslage (64) ist das Schubschild (61) außerhalb des vertikal projizierten Öffnungsquerschnitts, also im Schatten des Trichters (41) angeordnet.

Das Schubschild (61) und die Trennwand (71) bilden im Ausführungsbeispiel Stirnwände (61, 71) eines Schubkorbs (81). Die z.B. sechs Längsträger (82), die die Trennwand (71) und das Schubschild (61) verbinden, haben zusammen beispielsweise eine Zug-Querschnittsfläche von mindestens 1000 guadratmillimeter. Die einzelnen Längsträger (82) können als Voll- oder als Hohlprofile ausgebildet sein. Die Seitenflächen (83) des oben und unten offenen Schubkorbes (81) sind im Ausführungsbeispiel mit Blechen der Dicke 30 Millimeter beplankt. Das maximale Aufnahmevolumen des Schubkorbs (81) ist im Ausführungsbeispiel um 10 % größer als das Volumen des Schrottkorbs (3). Die oberen Längsträger (82) können als Anschlagleisten ausgebildet sein, die den Schubkorb (81) in seiner Bahn halten.

Das Schubschild (61) und die Trennwand (71) sind in Querrichtung (25) im unteren Bereich angeschrägt, vgl. Figur 2. In diesen Schrägen sind z.B. an einer Stützhalterung (84) Gleitplatten (85) angeordnet. Mittels der Gleitplatten (85) ist im Ausführungsbeispiel der Schubkorb (81) in Schwerkraftrichtung und in der Querrichtung (25) abgestützt.

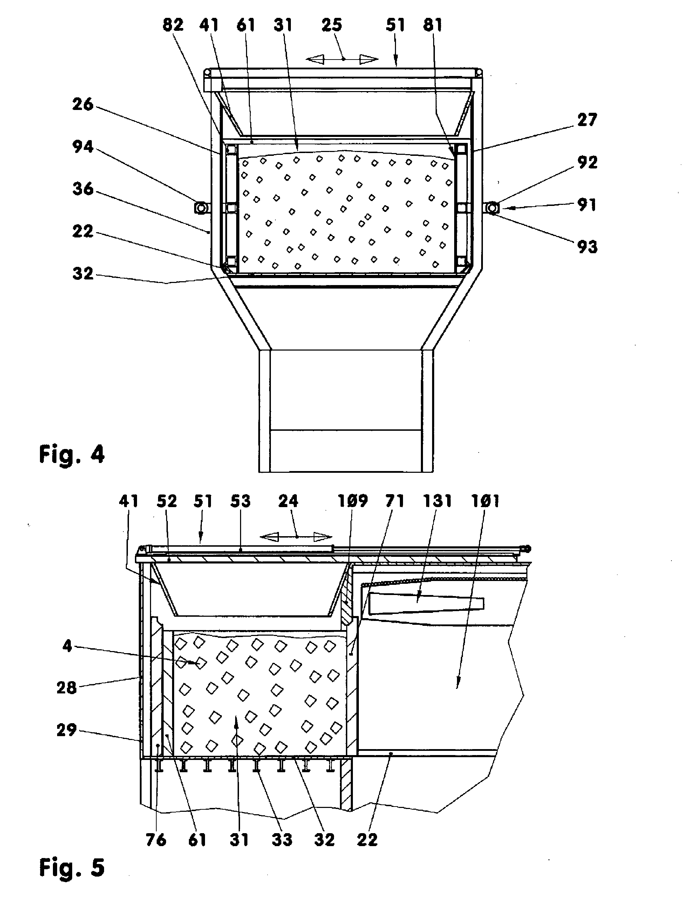

Am Schubschild (61) ist eine Antriebseinheit (91) angeordnet, die sich am Vorchargierfach (31) oder am schachtförmigen Behälter (101) abstützt, vgl. Figur 4. Diese Antriebseinheit (91) umfasst im Ausführungsbeispiel zwei Zylinder-Kolben-Einheiten (92), die an der Außenseite (36) des Vorchargierfachs (31) auf beiden Seiten des Schubschilds (61) angeordnet sind. Die einzelne Zylinder-Kolben-Einheit (92) hat beispielsweise einen wassergekühlten Zylindermantel (93) und einen in diesem geführten Kolben mit einer Kolbenstange (94). Der Kolbendurchmesser beträgt beispielsweise 300 Millimeter, der Kolbenstangendurchmesser 160 Millimeter. Der Betriebsdruck der Zylinder-Kolben-Einheiten (92) beträgt z.B. 160 x 10⁵ Pascal. Der Hub des Kolbens ist beispielsweise 5,4 Meter.

Der schachtförmige Behälter (101) hat z.B. ein Gesamtvolumen von 200 Kubikmetern und weist in vertikaler Richtung vier Bereiche (111 - 114) auf. In allen Bereichen (111 - 114) hat der schachtförmige Behälter (101) zumindest annähernd einen rechteckigen Querschnitt normal zu einer Vertikalen und glatte Wände (102). Im unteren Bereich kann er leicht konisch verjüngt sein. Der schachtförmige Behälter (101) kann in Längsrichtung (24), vgl. Figur 1 oder in Querrichtung (25) zum Vorchargierfach (31) angeordnet sein.

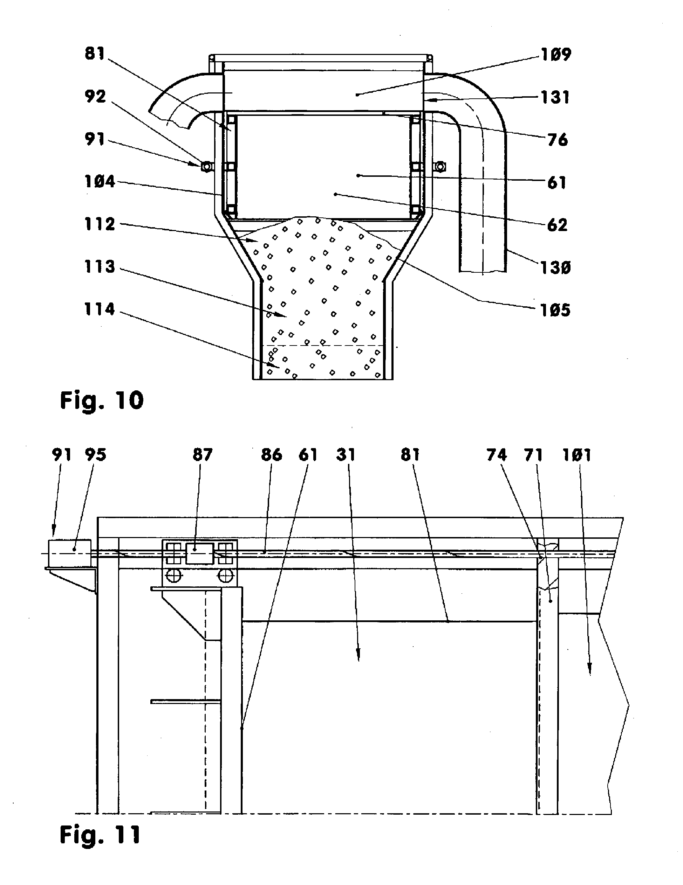

Der oberste Bereich (111), seine Höhe beträgt etwa 40 % der Behälterhöhe - hat an mindestens einer in Querrichtung (25) orientierten Stirnwänden eine Absaugöffnung (131) zum Anschluss der Absaugleitung (130), vgl. Figur 10. Diese Absaugöffnung (131) hat in der Darstellung der Figur 1 einen zumindest annähernd dreieckförmigen Querschnitt mit einer Querschnittsfläche von beispielsweise 1,4 Quadratmetern. Der Querschnitt kann auch rund, rechteckig, oval, etc. ausgebildet sein. Der schachtförmige Behälter (101) kann auch mehrere Absaugöffnungen (131) aufweisen. Die Unterkante der Absaugöffnung (131) liegt oberhalb der Ebene der Oberkante des Schubschilds (61).

In diesem obersten Bereich (111) führen die Führungsschienen (22) beispielsweise bis zu der den schachtförmigen Behälter in Längsrichtung (24) begrenzenden ungekühlten Wand (103). In Richtung des Vorchargierfaches (31) ist dieser Bereich in der Darstellung der Figur 1 mittels der Trennwand (71) abgegrenzt.

Im zweiten Bereich (112) ist der Querschnitt des schachtförmigen Behälters (101) an seinen in Querrichtung (25) orientierten Stirnwänden (104) von oben nach unten verjüngt, vgl. Figur 10. Der von der Behälterflanke (105) mit einer horizontalen Ebene eingeschlossene Winkel entspricht dem von der Trichterflanke (42) mit dieser Ebene eingeschlossenen Winkel.

Der dritte Bereich (113) hat einen konstanten Querschnitt. Seine Höhe beträgt z.B. 25 % der Höhe des schachtförmigen Behälters (101). Gegebenenfalls kann dieser Bereich (113) entfallen, wenn die Verjüngung des schachtförmigen Behälters (101) des zweiten Bereichs (112) bis in oder an den untersten Bereich (114) geführt ist.

Der unterste Bereich (114) weist beispielsweise an der Seitenwand (103) eine Ausgabeöffnung (106) auf. Diese Ausgabeöffnung (106) korrespondiert beispielsweise mit einer Öffnung (11) des Gefäßes (10) des Elektrolichbogenofens (5). Durch diese Öffnungen (106, 11) hindurch wird das Einsatzmaterial (4) aus dem schachtförmigen Behälter (101) in das Gefäß (10) des Elektrolichtbogenofens (5) gefördert.

Zum Fördern des Einsatzmaterials (4) im Bereich des schachtförmigen Behälters (101) verfügt das Chargierschacht-System (20) beispielsweise über eine Stoßvorrichtung (151). Durch Verfahren eines Stößels (152) der Stoßvorrichtung (151) werden einzelne Portionen des Einsatzmaterials (4) in das Gefäß (10) gefördert.

Das Fördern des Einsatzmaterials (4) aus dem schachtförmigen Behälter in das Gefäß (10) kann auch mittels Schwerkraft, einer Schwenkvorrichtung, einer Rüttelvorrichtung, einem Zugmitteltrieb, etc. erfolgen.

An der dem Ofengefäß (10) zugewandten Seite des Chargierschacht-Systems (20) ist eine Abgasleitung (141) angeordnet, die am oberen Ende in den schachtförmigen Behälter (101) mündet. Der Leitungsmantel dieser Abgasleitung (141) ist aus wassergekühlten Rohren (142) aufgebaut. In der Abgasleitung (141) ist eine einstellbare Klappe (143) eingebaut. Dies kann, wie dargestellt, eine sogenannte Schmetterlingsklappe oder eine Lamellenklappe sein.

Im Ausführungsbeispiel ist das gesamte Chargierschacht-System (20) verfahrbar augebildet. Beispielsweise kann das System (20) mittels eines Antriebs und der Rollen (161) um einen Hub von etwa zwei Metern vom Ofengefäß (10) weg verfahren werden. So werden Wartungsarbeiten am Ofengefäß (10) oder ein Herausnehmen des Ofengefäßes (10) nicht behindert.

Um das Einsatzmaterial (4) zu chargieren, wird zunächst der befüllte Schrottkorb (3) z.B. mittels des Hallenkrans (2) über dem Verschluss (51) positioniert. Das Schubschild (61) ist in der Ausgangsposition (64), die Trennwand (71) ist geschlossen. Nach dem Öffnen des Verschlusses (51) werden die Schrottkorbschalen (6) z.B. hydraulisch geöffnet. Der Schrott (4) fällt in das Vorchargierfach (31) zwischen das Schubschild (61) und die Trennwand (71), im Ausführungsbeispiel also in den Schubkorb (81). Nach dem Entleeren des Schrottkorbs (3) kann dieser sowie der Verschluss (51) geschlossen werden. Das Chargierschacht-System (20) ist nun vollständig geschlossen.

Die Figuren 4 und 5 zeigen das Chargierschacht-System (20) nach dem Laden eines Schrottkorbvolumens. Hierbei zeigt die Figur 4 einen Querschnitt und die Figur 5 einen Längsschnitt im Bereich des Vorchargierfachs (31). Der Schubkorb (81) hat das gesamte Schrottkorbvolumen aufgenommen. Der Verschlusschieber (52) ist geschlossen. Die Trennwand (71) ist am Schacht zentriert und dichtet den schachtförmigen Behälter (101) gegen das Vorchargierfach (31) ab. Die am Schubschild (61) angeordnete Abdichtwand (76) hat in dieser Ausgangslage (64) keine Funktion.

Sobald das Niveau des Einsatzmaterials (4) im schachtförmigen Behälter (101) unterhalb eines vorgegebenen Grenzwertes liegt, kann der Schrott (4) aus dem Vorchargierfach (31) in den schachtförmigen Behälter (101) gefördert werden. Das Niveau kann beispielsweise mittels Wägezellen (162) ermittelt werden.

Hierzu wird der Schubkorb (81) mittels der Antriebseinheit (91) in die in der Figur 6 dargestellte vordere Endlage (65) gefördert. Hierbei wird die Trennwand (71) geöffnet. Das Schubschild (61) schiebt den Schrott (4) entlang des Bodens (32), bis der Schrott (4) in den schachtförmigen Behälter (101) fällt. In der vorderen Endlage (65) ist im Ausführungsbeispiel die Öffnung (107) zwischen dem Vorchargierfach (31) und dem schachtförmigen Behälter (101) durch die Abdichtwand (76) verschlossen. Nach dem Entleeren des Schubkorbs (81) kann der Schubkorb (81) wieder in die Ausgangslage (64) gefördert werden. Der Schrott (4) liegt jetzt im schachtförmigen Behälter (101), wie in der Figur 6 dargestellt. Schrottteile, die gegebenenfalls auf dem Boden (32) liegengeblieben sind, können durch die Entleerungsöffnung (29) hindurch entsorgt werden.

Nun kann mittels der Stoßvorrichtung (151) Schrott (4) in das Ofengefäß (10) gefördert werden. Mit dem Zünden der Elektroden (12) im Schrott (4) beginnt der Schmelzprozess. Die Absauganlage saugt die während des Schmelzens entstehenden Abgase durch den schachtförmigen Behälter (101) in die Absaugöffnung (131). Gegebenenfalls kann ein Teil der Abgase - je nach Stellung der Klappe (143) - durch die Abgasleitung (141) gesaugt werden.

Die durch den Schmelzprozeß erwärmten Abgase geben beim Durchströmen des schachtförmigen Behälters (101) einen Teil ihrer Energie an den dort gelagerten Schrott (4) ab. Der Schrott (4) wird vorgewärmt bei gleichzeitiger Abkühlung der Abgase.

In der Ausgangslage (64) kann der Schubkorb (81) wie oben beschrieben neu beladen werden. Dies ist in der Figur 7 dargestellt. Die Trennwand (71) ist wieder verschlossen. Beim Beladen des Chargierschacht-Systems (20) können somit keine Abgase aus dem Ofengefäß (10) in die Umgebung (1) gelangen. Beispielsweise kann der Elektrolichtbogenofen (5) während des Beladens des Vorchargierfachs (31) ohne Unterbrechung weiter Schrott (4) einschmelzen.

Mittels der Stoßvorrichtung (151) wird nun z.B. in regelmäßigen Zeitintervallen weiter Schrott (4) in das Ofengefäß (10) gefördert und der Schmelzprozess fortgesetzt. Sobald das Niveau des Schrotts (4) im schachtförmigen Behälter (101) unterhalb des genannten Grenzwerts ist, kann - ohne Unterbrechen des Ofenschmelzprozesses - der nächste Inhalt aus dem Schubkorb (81) in den schachtförmigen Behälter (101) gefördert werden. Dies erfolgt wie oben beschrieben. Nach dem Fördern des zweiten Schubkorbvolumens liegt der Schrott (4) beispielsweise wie in den Figuren 8 und 10 dargestellt. Er ist bereichsweise aus dem Schubkorb (81) in den schachtförmigen Behälter (101) gerutscht. Der Schubkorb (81) ist in dieser Stellung zunächst blockiert. Die Abdichtwand (76) verschließt den schachtförmigen Behälter (101) gegenüber dem Vorchargierfach (31).

Beim weiteren Betrieb dringen die Abgase durch die gesamte Schrottsäule, so dass sämtlicher Schrott (4) im schachtförmigen Behälter (101) vorgewärmt wird. Mittels der Stoßvorrichtung (151) wird weiter Schrott (4) in das Ofengefäß (10) gefördert, so dass mit zunehmender Prozeßzeit die Höhe der Schrottsäule sinkt. Sobald der genannte Grenzwert der Niveauhöhe unterschritten wird, verfährt der Schubkorb wieder in die Ausgangslage (64), vgl. Figur 9. Die nächste Korbfüllung, z.B. der erste Korb für die nächste Schmelze, kann in das Vorchargierfach (31) geladen werden. Nach erfolgtem Abstich wird der bereits vorgewärmte Schrott (4) für die nächste Schmelze in das Ofengefäß (10) gefördert.

Die Figur 11 zeigt einen Schubkorb (81), dessen Antriebseinheit (91) einen Motor (95), z.B. einen Hydromotor umfasst. Das Führungssystem (22, 85) ist so aufgebaut wie im ersten Ausführungsbeispiel. Parallel zum Hubweg des Schubkorbes (81) ist z.B. ein in Form einer Gewindespindel (86) tordierter Vierkantstahl angeordnet. Er ist beispielsweise an der Außenseite (36) des Chargierschacht-Systems (20) in Längsrichtung an beiden Stirnwänden (28, 108) des Chargierschacht-Systems (20) drehbar gelagert.

Der Schubkorb (81) hat eine Spindelmutter (87), die die Gewindespindel (86) umgreift. Die Trennwand (71) hat im Bereich der Gewindespindel (86) einen z.B. mittels einer beweglichen Scheibe und einer Labyrinthdichtung abgedichteten Durchbruch (74).

Zum Verfahren des Schubkorbs (81) wird die Gewindespindel (86) mittels des Hydromotors (95), der ein Untersetzungsgetriebe umfassen kann, angetrieben. Gegebenenfalls kann auf beiden Seiten des Schubkorbs (81) eine Gewindespindel (86) mit einer Spindelmutter (87) angeordnet sein. Der Antrieb erfolgt mittels eines oder zweier Hydromotoren. Gegebenenfalls können auch Elektromotoren eingesetzt werden.

Eine weitere Antriebsvariante ist in der Figur 13 dargestellt. Das Schubschild (61) ist hier mittels zweier Seilzüge (96, 97) bewegbar. Die Seile (96, 97) durchdringen längsseitige Wände des Chargierschacht-Systems (20) und sind an der Außenwand des Chargierschacht-Systems (20) über Umlenkrollen und gegebenenfalls über einen Flaschenzug und/oder Seiltrommeln geführt. Letztere werden beispielsweise mittels eines Elektro- oder Hydromotors angetrieben. In dem dargestellten Längsschnitt ist das an der Schubseite (62) angeordnete Seil (96) unten und das Seil (97) an der Rückseite (66) des Schubschilds (61) oben angeschlagen. Auf beiden Seiten läuft eine seitlich angeordnete Führungsrolle (88) auf einer z.B. in einem Winkel von 45 Grad zu einer horizontalen Ebene angeordneten Führungsbahn (22). Die Führungsrollen (88) haben beispielsweise einen auf einer Achse gleitgelagerten Rollenkörper (89). Die im Ausführungsbeispiel eingesetzten gedrehten Gleitlagerbuchsen sind aus Kupfer-Zinn-Bronze mit einem Bleianteil von z.B. 7 % hergestellt. Anstatt der Führungsrollen können hier auch Gleitplatten (85) eingesetzt werden.

Es kann auch ein einziges Seil (96; 97) eingesetzt werden. Je nach Drehrichtung des Motors (95) wird der schubschildseitige oder der trennwandseitige Seilabschnitt (96; 97) gezogen und damit das Schubschild (61) in die Ausgangslage (64) oder in die Endlage (65) gefördert.

Bei einer derartigen Ausführungsform kann gegebenenfalls auf die Abhebesicherung und/oder die Tragrollen (88) verzichtet werden. Hierfür kann der Seilzug z.B. schräg nach unten oder nach oben geführt werden. Auch kann ein Schubkorb (81) im gespannten Seil (96; 97) hängend angeordnet sein. Eine Zentrierung erfolgt jeweils durch das Führungsblech (68) sowie beim Erreichen der Hubendlagen (64, 65) durch die Trennwand (71) und die Abdichtwand (76).

Die Figur 14 zeigt ein Schubschild (61) mit einer Führungsstange (67). Diese ragt beispielsweise in Richtung der Rückwand (28). An ihr sind beispielsweise vier seitliche Führungsrollen (37) angeordnet, deren Abstand voneinander größer ist als die doppelte Breite der Führungsstange (67). Weitere Rollen wälzen vorne unten (38) und hinten oben (39) auf der Führungsstange (67) ab. Der Antrieb des z.B. mittels Rippen (63) verstärkten Schubschilds (61) erfolgt z.B. mittels einer Zylinder-Kolben-Einheit oder mittels eines Hydromotors, der mittels eines Reibrades oder mittels eines verzahnten Ritzels die Führungsstange (67) antreibt. Bei einem Ritzelantrieb ist an der Führungsstange (67) beispielsweise eine Zahnstange angeordnet.

Die Trennwand (71), vgl. Figur 15, ist in diesem Ausführungsbeispiel getrennt vom Schubschild (61) ausgeführt. Beispielsweise ist sie um eine horizontale Achse (75) schwenkbar in der Zwischenwand (109) zwischen dem Vorchargierfach (31) und dem schachtförmigen Behälter (101) angeordnet.

Zum Fördern des Schrotts (4) aus dem Vorchargierfach (31) in den schachtförmigen Behälter (101) schiebt das verfahrbare Schubschild (61) den Schrott (4) in Richtung des schachtförmigen Behälters (101). Der Schrott (4) drückt die Trennwand (71) auf, die in der Darstellung der Figur 15 z.B. gegen den Uhrzeigersinn schwenkt. Sobald das Schubschild (61) die Zwischenwand (109) passiert, legt sich die Trennwand (71) auf dem Schubschild (61) ab. Die mit dem Schubschild (61) mitgeführte Abdichtwand (76) wird gegen die Zwischenwand (109) gedrückt. Auch in diesem Ausführungsbeispiel wird das Entweichen von Abgasen aus dem schachtförmigen Behälter (101) durch das Vorchargierfach (31) hindurch verhindert.

Beim Zurückfahren des Schubschilds (61) klappt die Trennwand (71) unter dem Einfluss der Schwerkraft wieder in ihre z.B. vertikale Ausgangslage. Hiernach dichtet sie wieder das Vorchargierfach (31) und den schachtförmigen Behälter (101) gegeneinander ab.

Die Trennwand (71) kann auch separat verfahrbar oder mittels eines Antriebs schwenkbar sein.

In der Figur 16 sind das Schubschild (61) und die Abdichtwand (76) beispielsweise um 1,5 Meter voneinander beabstandet. Das Schubschild (61) kann nun weiter in Richtung der Mitte des schachtförmigen Behälters (101) verfahren werden. Beispielsweise kann so der Schrott (4) im schachtförmigen Behälter (101) planiert werden.

Im Schubschild (61) ist außerdem eine Stoßvorrichtung (77) angeordnet. Diese ist beispielsweise so aufgebaut wie die Stoßvorrichtung (151) des Chargierschacht-Systems (20). Das Stoßschild (78) dieser Stoßvorrichtung (77) kann relativ zum Schubschild (61) verfahren. Hierbei ist das Stoßschild (78) in der dargestellten Grundposition bündig mit der Schubseite (62) des Schubschilds (61). Aus dieser Position heraus kann es z.B. um einen Meter in Richtung der Mitte des schachtförmigen Behälters (101) verfahren werden. Die Breite des Stoßschilds (78) kann der Breite des Schubschilds (61) entsprechen oder schmäler als dieses ausgebildet sein. Das Stoßschild (78) kann einzelne Segmente umfassen.

Auch Kombinationen der verschiedenen Ausführungsbeispiele sind denkbar.

### Bezugszeichenliste:

- 1: Umgebung
- 2: Fördervorrichtung, Hallenkran
- 3: Schrottkorb
- 4: Einsatzmaterial, Schrott
- 5: Elektrolichtbogenofen
- 6: Schrottkorbschalen

- 10: Ofengefäß
- 11: Öffnung
- 12: Elektroden

- 20: Chargierschacht-System
- 21: Traggerüst
- 22: Führungsschiene, Prismenleisten
- 23: Führungsflächen
- 24: Längsrichtung
- 25: Querrichtung
- 26: Seitenwände
- 27: Seitenwände
- 28: Stirnwand, Rückwand
- 29: Entleerungsöffnung

- 31: Vorchargierfach
- 32: Boden
- 33: Träger
- 34: Oberseite
- 35: Öffnung
- 36: Außenseite
- 37: Führungsrollen
- 38: Führungsrolle vorne unten
- 39: Führungsrolle hinten oben

- 41: Trichter, Befülltrichter
- 42: Trichterflanke

- 51: Verschluss
- 52: Verschlussschieber
- 53: Zylinder-Kolben-Einheit, hydraulisch

- 61: Schubschild, Stirnwand
- 62: Schubseite
- 63: Verstärkungsrippen
- 64: Ausgangslage
- 65: vordere Endlage
- 66: Rückseite
- 67: Führungsstange
- 68: Führungsblech

- 71: Trennwand; Stirnwand
- 72: Oberseite
- 73: Zentrierschrägen
- 74: Durchbruch in (71)
- 75: horizontale Achse
- 76: Abdichtwand
- 77: Stoßvorrichtung
- 78: Stoßschild

- 81: Schubkorb
- 82: Längsträger
- 83: Seitenflächen
- 84: Stützhalterung
- 85: Gleitplatten
- 86: Gewindespindel
- 87: Spindelmutter
- 88: Führungsrolle
- 89: Rollenkörper

- 91: Antriebseinheit
- 92: Zylinder-Kolben-Einheit
- 93: Zylindermantel
- 94: Kolbenstange
- 95: Motor, Hydromotor
- 96: Seilzug
- 97: Seilzug

- 101: schachtförmiger Behälter
- 102: Wände
- 103: ungekühlte Wand
- 104: Seitenwände
- 105: Behälterflanke
- 106: Ausgabeöffnung
- 107: Öffnung
- 108: Stirnwand
- 109: Zwischenwand

- 111: oberster Bereich
- 112: zweiter Bereich
- 113: dritter Bereich
- 114: unterster Bereich

- 130: Absaugleitung
- 131: Absaugöffnung

- 141: Abgasleitung
- 142: wassergekühlte Rohre
- 143: Klappe

- 151: Stoßvorrichtung
- 152: Stößel

- 161: Rollen
- 162: Wägezellen

## Patentansprüche

1. Chargierschacht-System (20) eines Elektrolichtbogenofens (5) mit einem öffenbaren Verschluss (51) und mit einem eine Ausgabeöffnung (106) und mindestens eine Absaugöffnung (131) umfassenden schachtförmigen Behälter (101), wobei der Verschluss (51) ein Vorchargierfach (31) verschließt, **dadurch gekennzeichnet**
- **dass** das Vorchargierfach (31) mittels einer öffenbaren Trennwand (71) vom schachtförmigen Behälter (101) getrennt ist,
- **dass** im Vorchargierfach (31) ein verfahrbares Schubschild (61) angeordnet ist und
- **dass** das Schubschild (61) eine der Trennwand (71) zugewandte Schubseite (62) hat.

2. Chargierschacht-System (20) nach Anspruch 1, **dadurch gekennzeichnet, dass** das Schubschild (61) schaufelförmig ausgebildet ist.

3. Chargierschacht-System (20) nach Anspruch 1, **dadurch gekennzeichnet, dass** das Vorchargierfach (31) einen Befülltrichter (41) trägt.

4. Chargierschacht-System (20) nach Anspruch 1, **dadurch gekennzeichnet, dass** die Projektionsfläche der Trennwand (71) in die Ebene der Trennfläche größer ist als die in dieselbe Ebene projizierte Fläche des Schubschilds (61).

5. Chargierschacht-System (20) nach Anspruch 1, **dadurch gekennzeichnet, dass** das Schubschild (61) und die Trennwand (71) Stirnwände eines Schubkorbes (81) bilden.

6. Chargierschacht-System (20) nach Anspruch 5, **dadurch gekennzeichnet, dass** der Schubkorb (81) bodenlos ist,

7. Verfahren zum Befüllen eines eine Ausgabeöffnung (106) und mindestens eine Absaugöffnung (131) umfassenden schachtförmigen Behälters (101) eines Chargierschacht-Systems (20) nach Anspruch 1,
- wobei bei Lage des Schubschilds (61) in einer Ausgangsposition (64) und bei geschlossener Trennwand (71) der Verschluss (51) geöffnet wird,
- wobei nach dem Laden des Einsatzmaterials (4) in das Vorchargierfach (31) - bei weiterhin geschlossener Trennwand (71) - der Verschluss (51) verschlossen wird und
- wobei die Trennwand (71) geöffnet wird und das Schubschild (61) mit seiner der Trennwand (71) zugewandten Schubseite (62) das Einsatzmaterial (4) in den schachtförmigen Behälter (101) fördert.

## Claims

1. Charging stack system (20) in an electric arc furnace (5), said system comprising a gate (51) adapted to be opened and a stack-like container (101) having a discharge opening (106) and at least one suction opening (131) and said gate (51) being adapted for closing a pre-heating compartment (31), **characterized in that**
- the pre-heating compartment (31) is separated from the stack-like container (101) by a partition (71) adapted to be opened,
- the pre-heating compartment (31) has a pusher shield (61) therein; and
- the pusher shield (61) has a pushing side (62) facing partition (71).

2. Charging stack system (20) as claimed in claim 1, **characterized in that** pusher shield (61) is shovel-shaped.

3. Charging stack system (20) as claimed in claim 1, **characterized in that** the pre-heating compartment (31) carries a filling funnel (41).

4. Charging stack system (20) as claimed in claim 1, **characterized in that** the area of partition (71) projected into the plane of the separating surface is larger than the area of pusher shield (61) projected into the same plane.

5. Charging stack system (20) as claimed in claim 1, **characterized in that** the pusher shield (61) and the partition (71) form the front and end walls of a pusher basket (81).

6. Charging stack system (20) as claimed in claim 5, **characterized in** hat the pusher basket (81) is configured to have no bottom wall.

7. A method of filling a stack-like container (101) in a charging system (20), said container (101) having a discharge opening (106) and at least one suction opening (131), as claimed in claim 1, wherein
- the gate (51) is opened when pusher shield (61) is located in a starting position (64) and the partition (71) is closed;
- the gate (51) is closed after the feedstock (4) has been filled into the pre-heating compartment (31) while the partition (71) continues to be closed, and
- the partition (71) is opened and the pusher shield (61) conveys the feedstock (4) into said stack-like container (101) by its pushing side (62) facing the partition (71).

## Revendications

1. Système de puits de chargement (20) d'un four à arc électrique (5) qui comporte un mécanisme de fermeture (51) pouvant être ouvert et un contenant en forme de puit (101) comprenant un orifice d'évacuation (106) et au moins un orifice d'aspiration (131), le mécanisme de fermeture (51) fermant un compartiment de chargement préalable (31), **caractérisé en ce**
- **que** le compartiment de chargement préalable (31) est séparé du contenant en forme de puit (101) par une paroi de séparation (71) pouvant être ouverte,
- **qu'**une lame poussoir mobile (61) est placée dans le compartiment de chargement préalable (31),
- **que** la lame(61) a une face de poussée (62) orientée vers la paroi de séparation (71).

2. Système de puits de chargement (20) selon la revendication 1, **caractérisé en ce que** la lame poussoir (61) est conçue en forme de pelle.

3. Système de puits de chargement (20) selon la revendication 1, **caractérisé en ce que** le compartiment de chargement préalable (31) porte une trémie de remplissage (41).

4. Système de puits de chargement (20) selon la revendication 1, **caractérisé en ce que** la surface de la paroi de séparation (71) projetée sur le plan de la surface de séparation est plus grande que la surface de la lame de poussée (61) projetée sur le même plan.

5. Système de puits de chargement (20) selon la revendication 1, **caractérisé en ce que** la lame de poussée (61) et la paroi de séparation (71) forment les parois frontales d'une corbeille coulissante (81).

6. Système de puits de chargement (20) selon la revendication 5, **caractérisé en ce que** la corbeille coulissante (81) est réalisée sans fond.

7. Procédé pour le remplissage d'un contenant en forme de puit (101), comprenant un orifice d'évacuation (106) et au moins un orifice d'aspiration (131), d'un système de puits de chargement (20) selon la revendication 1, **caractérisé par le fait**
- **que** le mécanisme de fermeture (51) est ouvert, lorsque la lame de poussée (61) se trouve dans une position initiale (64) et lorsque la paroi de séparation (71) est fermée,
- **que** le mécanisme de fermeture (51) est fermé après le chargement du matériel de départ (4) dans le compartiment de chargement préalable (31) - la paroi de séparation étant toujours fermée - et
- **que** la paroi de séparation (71) est ouverte et la lame de poussée (61) amène le matériel de départ (4), avec sa face de poussée (62) orientée vers la paroi de séparation (71), dans le contenant en forme de puit (101).
